(19) Europäisches Patentamt
European Patent Office
Office européen des brevets

(11) **EP 2 131 621 B1**

(12) **EUROPEAN PATENT SPECIFICATION**

(45) Date of publication and mention
of the grant of the patent:
**02.10.2013   Bulletin 2013/40**

(51) Int Cl.:
***H04W 52/50*** *(2009.01)*       ***H04W 52/28*** *(2009.01)*
***H04W 74/08*** *(2009.01)*

(21) Application number: **09006508.7**

(22) Date of filing: **14.05.2009**

(54) **Mobile communication terminal station and transmission power setting method**

Mobilkommunikationsendstelle und Verfahren zur Einstellung der Übertragungsleistung

Station de terminal de communication mobile et son procédé de réglage de la puissance de transmission

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority:  **04.06.2008   JP 2008147310**

(43) Date of publication of application:
**09.12.2009   Bulletin 2009/50**

(73) Proprietor: **NTT DOCOMO, INC.**
**Chiyoda-ku**
**Tokyo 100-6150 (JP)**

(72) Inventors:
• **Omori, Hiroo**
  **Tokyo 100-6150 (JP)**
• **Okumura, Yukihiko**
  **Tokyo 100-6150 (JP)**

(74) Representative: **Henseler, Daniela**
  **Sparing Röhl Henseler**
  **Patentanwälte**
  **Postfach 14 04 43**
  **40074 Düsseldorf (DE)**

(56) References cited:
**EP-A- 1 198 076       WO-A-2005/055462**
**JP-A- 2007 266 733**

## Description

The present invention generally relates to mobile communication terminal stations and transmission power setting methods, in particular, to a mobile communication terminal station and a transmission power setting method for use in power ramping by transmitting a preamble part of data for setting a transmission power, in advance of transmitting data to a base transceiver station.

At present, in a movable terminal station for communication (hereinafter, referred to as mobile communication terminal station), there is a technique for controlling a transmission power so as to transmit data (transmission data) by use of power ramping. The conventional technique for controlling the transmission power by use of power ramping is described in JP 2007-266733 A, for example.

Herein, "preamble part" represents a bit sequence, out of the transmission data, for indicating the start of communication on a data link, and "message part" represents information part, following the preamble part, that is a purpose of transmission.

In a random access method with the use of power ramping, for example, when a mobile communication terminal station transmits transmission data to a base transceiver station, the preamble part of the transmission data is transmitted in advance of the message part. The transmission is repeated until the mobile communication terminal station receives a signal (Acquisition Indicator) indicating permission of transmission of the message part from the base transceiver station. Such a transmission method is referred to as Slotted ALOHA together with high-speed acquisition indication.

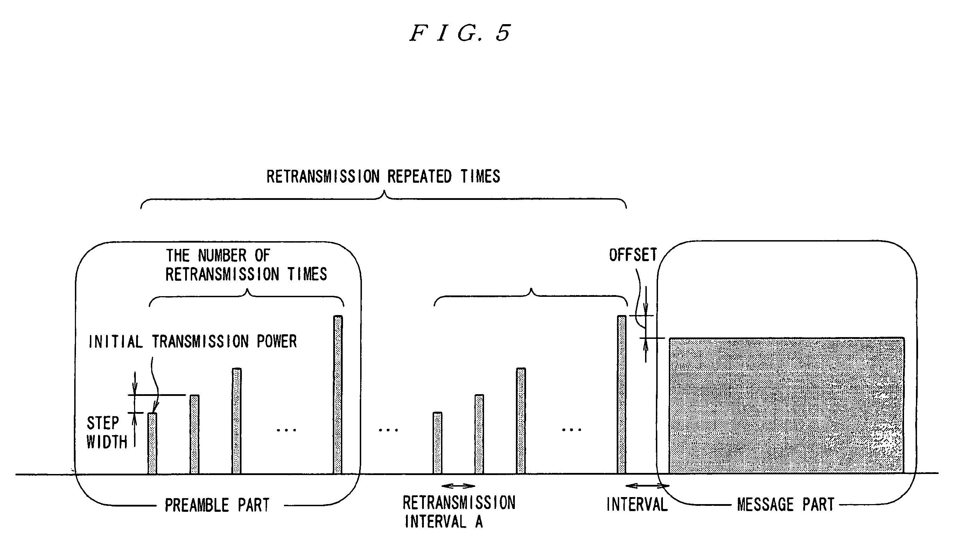

FIG. 5 is a diagram illustrative of a specific method of power ramping. In the example illustrated, the preamble part is transmitted at regular intervals (represented by retransmission interval A in FIG. 5) by a certain number of times (represented by the number of retransmissions), while the transmission power is being increased from an initial transmission power by a certain value (represented by step width in FIG. 5). In addition, this transmission is set to be one unit and the preamble part is transmitted multiple number of times (represented by number of retransmission repeated times in FIG. 5) so as to set the transmission power of the message part.

Furthermore, an initial transmission power, step width, transmission interval, the number of retransmission times, and the number of retransmission repeated times are included in parameters of power ramping. The preamble part is transmitted by use of power ramping, while the parameters are being adjusted. Then, the transmission power of the message part is set based upon the transmission power corresponding to a signal for permitting transmission that has been transmitted from the base transceiver station. Such an operation allows the initial transmission power to be set at an optimum value, with which the base transceiver station is capable of receiving the initial transmission power of the message part in a sufficient manner and the mobile communication terminal station does not consume the power unnecessarily.

In recent years, however, there is a demand for use of mobile communication stations under a high-speed moving environment such as in a bullet train, in accordance with the spread of the mobile communication terminal stations. When the mobile communication terminal station moves at a high speed, the relative position of the mobile communication terminal station and the base transceiver station is drastically changed in a short period of time. The change in the relative position will change the amplitude or phase of the transmission data over time dues to Rayleigh Fading phenomenon, so the signal quality will be subject to change.

If the signal quality is changed, the detection accuracy of the preamble part in the base transceiver station is degraded, thereby making difficult the synchronization between the base transceiver station and the mobile communication terminal station. Also, the preamble part is retransmitted frequently, thereby causing problems that the amount of network (NW) resources consumed by the mobile communication terminal station is increased, and in addition, that the period of time until the transmission is permitted is longer.

These problems are solved by increasing the transmission power for the preamble part and enhancing the detection accuracy of the preamble part, in the base transceiver station. However, if the initial value of the transmission power for the preamble part is set at an excessive value, the consumed amount of the NW resources and the uplink interference amount will be great. Therefore, under the high-speed moving environment, the transmission of the preamble part has to be controlled in response to the moving speed of the mobile communication terminal station.

Known from EP 1 198 076 A and WO 2005/055462 A is a mobile communication terminal station and a method according to the preamble of claim 1 and 4, respectively.

It should be noted, however, that the above-described conventional technique does not intend to use the mobile communication terminal stations under the high-speed moving environment. For this reason, power ramping is controlled for the conventional mobile communication terminal station by use of certain parameters set beforehand, regardless of the moving speed of the mobile communication terminal. The inventors of the present invention discovered that the consumption amount of the NW resources and the uplink interference amount are to be improved.

The present invention has been made in view of the above circumstances and provides a mobile communication terminal station and a transmission power setting method, whereby a preamble part is transmitted by use of optimal parameter for a moving speed of the mobile communication terminal station.

According to an aspect of the present invention, there is provided a mobile communication terminal station according to claim 1.

With such a configuration, a transmission power for the preamble part is set in response to a moving speed of the mobile communication terminal station. Accordingly, the transmission parameter optimal for the moving speed of the mobile communication terminal station is set and a mobile communication terminal station that is capable of transmitting the preamble part by use of the parameters optimal for the moving speed of the mobile communication terminal station is provided.

According to another aspect of the present invention, there is provided a transmission power setting method in accordance with claim 4. With such a configuration, a transmission power for the preamble part is set in response to a moving speed of the mobile communication terminal station. Accordingly, the transmission parameter optimal for the moving speed of the mobile communication terminal station is set and a transmission power setting method that is capable of transmitting the preamble part by use of the parameters optimal for the moving speed of the mobile communication terminal station is provided.

A mobile communication terminal station and a transmission power setting method according to aspects of the present invention as described above are capable of setting transmission parameters in consideration of a moving speed of the mobile communication terminal station. This allows the provision of the mobile communication terminal station and transmission power setting method, whereby the consumed amount of NW resources and interference amount are further reduced and a preamble part is transmitted by use of parameters optimal for the mobile communication terminal station that is moving.

Further objects, advantages and embodiments may be taken from the following description.

FIG. 1 illustrates a communication system including a mobile communication terminal station according to an aspect of the present invention;
FIG. 2 illustrates a functional block diagram of a power ramping transmission parameter selecting section illustrated in FIG. 1;
FIG. 3 illustrates transmission parameters stored in a power ramping transmission parameter storing section;
FIG. 4 is a flowchart illustrative of the operation of a mobile telephone according to an aspect of the present invention; and
FIG. 5 is a diagram illustrative of power ramping specifically.

A mobile communication terminal station and a communication power setting method according to an embodiment of the present invention will now be described with reference to the drawings.

(Overall System Configuration)

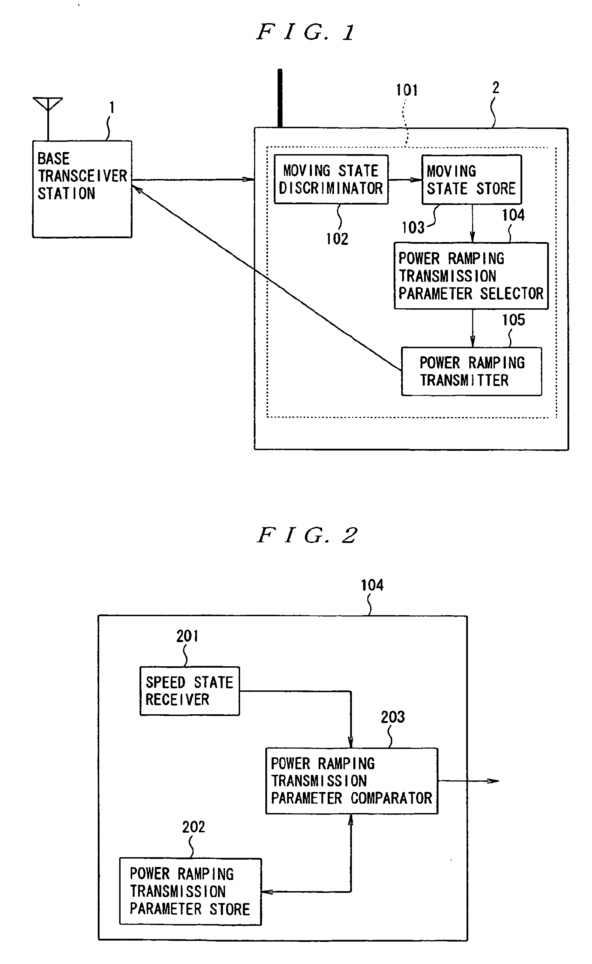

FIG. 1 illustrates a communication system including a mobile communication terminal station according to an aspect of the present invention. As illustrated, the communication system according to an aspect of the present invention includes: a mobile communication terminal station 2; and a base transceiver station 1 for transmitting and receiving data to and from the mobile communication terminal station 2. According to the present embodiment, in order to focus attention on data to be transmitted to the base transceiver station 1 from the mobile communication terminal station 2, the data transmitted to the base transceiver station 1 from the mobile communication terminal station 2 is referred to as transmission data. In addition, the transmission data includes: a message part indicating information to be transmitted; and a preamble part indicating a transmission start of the message part.

The base transceiver station 1 is connected to a mobile switching center via a base transceiver station controller, not shown. The base transceiver station 1 receives the transmission data from the mobile communication terminal station 2, and then transmits the transmission data to another mobile communication terminal station, not shown, via the mobile switching center or the like. Herein, a range where radio waves transmitted by the base transceiver station 1 reach is referred to as cell.

The mobile communication terminal station 2 is provided with a power ramping section 101 for transmitting the preamble part, while changing transmission parameters that are transmission conditions of the preamble part. The transmission parameters denote the transmission conditions for the preamble part. Also, power ramping denotes processing of repeatedly transmitting the preamble part, while changing the transmission electricity (power).

The power ramping section 101 includes: a moving state discriminator 102 for discriminating the moving state of the mobile communication terminal station 2; a moving state store 103 for successively storing information relating to the moving speed; a power ramping transmission parameter selector 104 for selecting a transmission parameter to be set in response to the moving state discriminated by the moving state discriminator 102; and a power ramping transmitter 105 for transmitting the preamble part to the base transceiver station 1 by use of the transmission parameter selected by the power ramping transmission parameter selector 104.

In the above configuration, for example, the moving state discriminator 102 is capable of measuring a momentary value of a radio wave (hereinafter, referred to as radio signal) transmitted from the base transceiver station 1, and counting the number of level drops of the radio signal per unit time with the use of the momentary value. The "level drop" means a phenomenon caused by the Rayleigh fluctuations of a radio signal, and dropping of the level of the radio signal at intervals of approximately half wavelength thereof.

According to the moving state discriminator 102 as described above, a moving speed v of the mobile communication terminal station 2 is obtainable by the following expression, where λ represents a wavelength of a radio signal, t represents a unit time, n represents the number of level drop times per unit time.

$$V = (n \bullet \lambda / 2)/ t$$

The moving state discriminator 102 repeatedly receives the radio signal that has been transmitted from the base transceiver station, and then repeatedly calculates the moving speed v of the mobile communication terminal station 2 with the above expression. The calculated moving speed is successively stored in the moving state store 103. The moving state store 103 according to the present embodiment stores a counted number n of the level drops.

However, the moving state discriminator 102 according to the present embodiment is not limited to the above configuration. In other words, the moving state discriminator 102 is not limited to the configuration for detecting the moving speed of the mobile communication terminal station 2 by use of the level drop, but may have, for example, a Global Positioning System (GPS) function provided in the mobile communication terminal station 2.

In addition, the moving state discriminator 102 may calculate the moving speed of the mobile communication terminal station 2 by use of changeover of cell where the mobile communication terminal station 2 exists. When the moving speed is detected by the changeover of cell, the notified information transmitted from the base transceiver station 1 is configured to include information indicating the position of the mobile communication terminal station 2. In this configuration, the mobile communication terminal station 2 is capable of detecting not only the changeover of cell but also the distance that the mobile communication terminal station 2 moved within a given period of time.

Furthermore, the mobile communication terminal station 2 receives a signal transmitted from a single antenna, so that the moving state discriminator 102 may calculate the moving speed of the mobile communication terminal station 2 with a phasing pitch.

Moreover, the present embodiment is not limited to the configuration in which the mobile communication terminal station 2 has the moving state discriminator 102, but the base transceiver station 1 may discriminate a moving state or a speed state of the mobile communication terminal station 2. If this configuration is employed, the moving state discriminator 102 of the mobile communication terminal station 2 acquires information relating to the moving state or the speed state of the mobile communication terminal station 2 from the base transceiver station 1, and then discriminates the moving state or the speed state of the mobile communication terminal station 2 based upon the acquired information. If the base transceiver station 1 discriminates the moving state or the speed state of the mobile communication terminal station 2, a conceivable example is that the base transceiver station 1 receives the signal transmitted from the mobile communication terminal station 2 and calculates the moving speed of the mobile communication terminal station 2 with its phasing pitch.

(Configuration Example of Power Ramping Transmission Parameter Selecting Section)

FIG. 2 illustrates a functional block diagram of the power ramping transmission parameter selector 104 illustrated in FIG. 1. The power ramping transmission parameter selector 104 includes: a speed state receiver 201; a power ramping transmission parameter store 202; and a power ramping transmission parameter comparator 203.

The speed state receiver 201 loads a moving speed stored in the moving state store 103 so as to pass the moving speed to the power ramping transmission parameter comparator 203. The power ramping transmission parameter store 202 is storage such as a memory storing the transmission parameters for the preamble part.

The moving speed is input into the power ramping transmission parameter comparator 203 via the speed state receiver 201. Then, the power ramping transmission parameter comparator 203 compares the moving speed taken with the transmission parameters stored in the power ramping transmission parameter store 202, and selects the transmission parameters corresponding to the moving speed. After that, the power ramping transmission parameter comparator 203 outputs the selected transmission parameter to the power ramping transmitter 105.

(Example of Transmission Parameter)

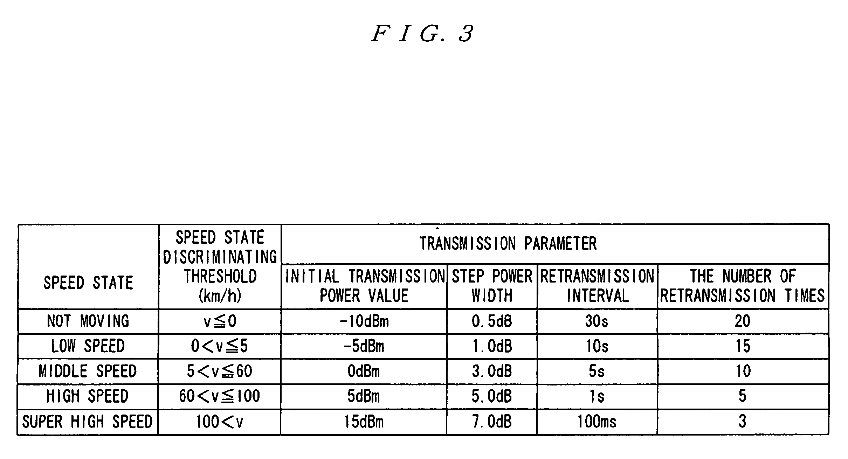

FIG. 3 illustrates transmission parameters stored in the power ramping transmission parameter store 202. According to the present embodiment, as illustrated, an initial transmission power value, step power width, retransmission interval, and the number of retransmission times are set as the transmission parameters. Each of the transmission parameters is associated with each speed state of "not moving", "low speed", "middle speed", "high speed", and "super high speed". The above each speed state is determined by the moving speed v of the mobile communication terminal station 2.

The speed state indicates that the mobile communication terminal station 2 moves faster in the order of "not moving", "low speed", "middle speed", "high speed", and "super high speed". According to the present embodiment, the transmission parameter is configured such that a greater value should be selected as an initial transmission power, when the moving speed of the mobile communication terminal station 2 is higher. In addition, according to the present embodiment, as the moving speed of the mobile communication terminal station 2 becomes faster, the step power width is set to be greater, the retransmission interval is set to be shorter, and the number of retransmission times is set to be smaller. Such settings are made, because the signal quality of the transmission data is greatly fluctuated in a short period of time, as the mobile communication terminal station 2 moves at a high speed.

Referring to FIG. 3, in a case where the moving speed v of the mobile communication terminal station 2 is, for example, higher than 5 km/h and lower than 60 km/h, the moving speed of the mobile communication terminal station 2 is determined to be "middle speed". In this case, the power ramping transmission parameter selector 104 selects "0 dBm" for the initial transmission power, "3.0 dB" of the step power width, "5 s" of the retransmission interval, and "10" of the number of retransmission times, so as to correspond to the "middle speed".

In this sense, the initial transmission power denotes a transmission power of the preamble part to be firstly transmitted out of the preamble parts to be transmitted multiple number of times. Incidentally, "dBm", which is a unit of the initial transmission power, denotes a power ratio with 1 mW set at 0 dBm. The step power width 3.0 dB represents the ratio of the power with respect to the initial transmission power.

(Operation of Power Ramping Transmission Parameter Comparing Section)

The power ramping transmission parameter comparator 203 outputs the selected transmission parameters to the power ramping transmitter 105, based upon FIG. 3. The power ramping transmitter 105 transmits the preamble part according to the transmission parameters that have been output. That is to say, in a case where the moving speed of the mobile communication terminal station 2 is "middle speed", the power ramping transmitter 105 sets the initial transmission power at 0 dBm, and then transmits the preamble part repeatedly, while increasing the set value every time by 3.0 dB. The time interval between one transmission of a certain preamble part and next transmission (retransmission) thereof is 5 seconds, and the number of retransmission times is 10.

Additionally, according to the present embodiment, as described heretofore, the moving state discriminator 102 repeatedly calculates the moving speed of the mobile communication terminal station 2. The calculated moving speeds are successively input into the power ramping transmission parameter selector 104, so that the power ramping transmission parameter selector 104 selects the transmission parameters based upon the moving speed that has been input.

At this time, the power ramping transmission parameter comparator 203 compares the moving speed input from the speed state receiver 201 with a previously-input moving speed. Then, when the both values are same, subsequent processes will not be executed. When a currently-input moving speed and the previously-input moving speed are different, the power ramping transmission parameter comparator 203 selects the transmission parameters corresponding to the currently-input moving speed.

The selected transmission parameters are output to the power ramping transmitter 105. The power ramping transmitter 105 transmits the preamble part by use of the selected transmission parameters. As a result, when the moving speed of the mobile communication terminal station 2 is changed, it is possible to change the transmission parameters so as to correspond to the change and update the previous transmission parameters with the changed transmission parameters.

It should be noted that the present embodiment is not limited to the above-described configuration. For example, as to the transmission parameters, all of the initial transmission power, step power width, retransmission interval, and the number of retransmission times are not limited to those associated with the speed state, but at least the initial transmission power may be associated with the speed state.

(Details of Power Ramping Transmission Processing)

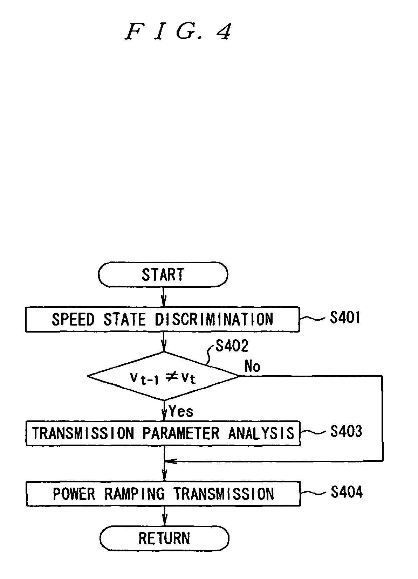

FIG. 4 is a flowchart illustrative of the operation of the mobile communication terminal station 2 with the above-described configuration. The mobile communication terminal station 2 firstly discriminates the moving speed of the mobile communication terminal station 2 as a speed state so as to detect the moving speed of the mobile communication terminal station 2 (step S401). According to the present embodiment, a radio signal transmitted from the base transceiver station 1 is received for the discrimination of the moving speed. Then, the mobile communication terminal station 2 counts the number of level drops of the radio signal. Subsequently, the mobile communication terminal station 2 also determines whether or not the range of the speed state, in which a currently-input (t-th time) moving speed vt of the mobile communication terminal station 2 is included (the range of speed such as low speed or high speed, as illustrated in FIG. 3), and that of the speed state, in which a previously-input ((t-1)-th time) moving speed v(t-1) of the mobile communication terminal station 2 is included are different (step S402).

The receipt of the radio signal is a necessary process, according to the present embodiment, in a case of detecting the moving speed by receiving the radio signal transmitted from the base transceiver station. If the moving speed is detected by use of another method, a necessary process will be executed for detecting the moving speed in another method instead of the receipt of the radio signal.

As a result of the determination in step S402, when the range of the speed state including the moving speed vt and that of the speed state including the moving speed v(t-1) are same (step S402: No), the power ramping transmitter 105 transmits the preamble part by use of power ramping, without changing the transmission parameters (step S404).

Meanwhile, when the range of the speed state including the moving speed vt and that of the speed state including the moving speed v (t- 1) are different (step S402: Yes), the power ramping transmission parameter comparator 203 compares the moving speed vt with the transmission parameters stored in the power ramping transmission parameter store 202. subsequently, the power ramping transmission parameter comparator 203 selects the transmission parameters corresponding to the moving speed vt (step S403: transmission parameter analysis) . The power ramping transmitter 105 transmits the preamble part by use of power ramping (step S404) .

Moreover, the above processing is repeated whenever the mobile communication terminal station 2 receives a radio signal from the base transceiver station.

(Conclusion)

According to the present embodiment discussed heretofore, it is possible to transmit the preamble part by use of power ramping in consideration of the moving speed of the mobile communication terminal station 2. This allows the increase in the initial transmission power, when the mobile communication terminal station 2 is moving at a high speed and the base transceiver station 1 hardly receives the preamble part. It is therefore possible to suppress the number of retransmission times of the preamble part and thereby to suppress the consumption of NW resources.

Conversely, when the mobile communication terminal station 2 is moving at a low speed and the base transceiver station 1 readily receives the preamble part, the initial transmission power is suppressed at a relatively low value, thereby avoiding the increase in the uplink interference amount. This also prevents the mobile communication terminal station 2 from consuming the power more than necessary for the transmission of the transmission data.

The present embodiment is not limited to the above-described configuration. That is to say, the setting parameters may be set for every certain threshold with the use of a predefined table, as illustrated in FIG. 3, or may be decided by a calculating formula. An example is -10 + v x 25/100 is conceivable, as a calculating formula for calculating the initial transmission power value. Another example may be a combination of a table and a calculating formula for parameter settings such that a calculating formula is employed for the moving speed 50 km or less and a table for setting the parameters for every threshold is employed for the moving speed 50 km or more.

**Claims**

1. A mobile communication terminal station (2) adapted to employ a random access method with the use of power ramping while a transmission power is being controlled and to transmit a preamble part of transmission data in advance of a message part of the transmission data, the mobile communication terminal station (2) comprising:

   a power ramping transmission parameter selector (104) adapted to set transmission parameters used for the power ramping, wherein the parameters of the power ramping include an initial transmission power, a step width, a transmission interval, and a given number of retransmission times,

   **characterized in that**
   the mobile communication terminal station (2) comprises a moving state discriminator (102) that discriminates a moving state of the mobile communication terminal station (2) ; and
   the power ramping transmission parameter selector (104) further being adapted to set the transmission parameters in response to the moving state discriminated by the moving state discriminator (102), wherein the parameters of the power ramping further include a given number of retransmission repeated times, and wherein the preamble part is transmitted at the transmission interval the given number of retransmission times, while the transmission power is being increased from the initial transmission power by the step width, and then the preamble part is retransmitted the given number of retransmission repeated times so as to set the transmission power of the message part.

2. The mobile communication terminal station (2) according to claim 1, wherein the moving state of the mobile communication terminal station (2) is a moving speed of the mobile communication terminal station (2).

3. The mobile communication terminal station (2) according to claim 1 or 2, wherein each of the transmission parameters is associated with each moving state of not moving, low speed that is a moving speed higher than 0 km/h and equal to or lower than 5 km/h, middle speed that is moving speed higher higher than 5 km/h and equal to or lower than 60 km/h, high speed that is moving speed higher higher than 60 km/h and equal to or lower than 100 km/h, and super high speed that is moving speed higher higher than 100 km/h.

4. A transmission power setting method for setting a transmission power of a mobile communication terminal station (2) that employs a random access method with the use of power ramping while a transmission power is being controlled and that transmits a preamble part of transmission data in advance of a message part of the transmission data,
**characterized by**
discriminating a moving state of the mobile communication terminal station (2); and
setting transmission parameters used for the power ramping in response to the moving state discriminated,
wherein the parameters of the power ramping include an initial transmission power, a step width, a transmission interval, a given number of retransmission times, and a given number of retransmission repeated times, and
wherein the preamble part is transmitted at the transmission interval the given number of retransmission times, while the transmission power is being increased from the initial transmission power by the step width, and then the preamble part is retransmitted the given number of retransmission repeated times so as to set the transmission power of the message part.

5. The method according to claim 4, wherein the moving state of the mobile communication terminal station (2) is a moving speed of the mobile communication terminal station (2).

6. The method according to claim 4 or 5, wherein each of the transmission parameters is associated with each moving state of not moving , low speed that is a moving speed higher than 0 km/h and  equal to or lower than 5 km/h, middle speed that is a moving speed higher than 5 km/h and equal to or lower than 60 km/h, high speed that is moving speed higher than 60 km/h and equal to or lower than 100 km/h, and super high speed that is a moving speed higher than 100 km/h.


**Patentansprüche**

1. Mobilkommunikationsendgerätestation (2), die ausgelegt ist, ein Zufallszugangsverfahren bei Verwendung eines Leistungsanstiegs, während eine Sendeleistung gesteuert wird, einzusetzen, und einen Präambelteil von Sendedaten vor einem Nachrichtenteil der Sendedaten zu senden, wobei die Mobilkommunikationsendgerätestation (2) umfasst:

   eine Leistungsanstiegssendeparameterauswahlvorrichtung (104), die ausgelegt ist, Sendeparameter einzustellen, die für den Leistungsanstieg verwendet werden,
   wobei die Parameter des Leistungsanstiegs eine anfängliche Sendeleistung, eine Schrittweite, ein Sendeintervall und eine vorgegebene Anzahl für erneutes Senden enthalten,

**dadurch gekennzeichnet, dass**
die Mobilkommunikationsendgerätestation (2) einen Diskriminator (102) für einen Bewegungszustand umfasst, der einen Bewegungszustand der Mobilkommunikationsendgerätestation (2) unterscheidet; und
die Leistungsanstiegssendeparameterauswahlvorrichtung (104) ferner ausgelegt ist, die Sendeparameter in Reaktion auf den Bewegungszustand, der von dem Diskriminator (102) für einen Bewegungszustand unterschieden wurde, einzustellen,
wobei die Parameter des Leistungsanstiegs ferner eine gegebene Anzahl für wiederholtes erneutes Senden enthalten, und
wobei der Präambelteil zu dem Sendeintervall so oft gesendet wird, wie es der gegebenen Anzahl für erneutes Senden entspricht, während die Sendeleistung von der anfänglichen Sendeleistung um die Schrittweite erhöht wird, und dann der Präambelteil erneut so oft gesendet wird, wie es der gegebenen Anzahl für wiederholtes erneutes Senden entspricht, um die Sendeleistung des Nachrichtenteils einzustellen.


2. Mobilkommunikationsendgerätestation (2) nach Anspruch 1, wobei der Bewegungszustand der Mobilkommunikationsendgerätestation (2) eine Bewegungsgeschwindigkeit der Mobilkommunikationsendgerätestation (2) ist.

3. Mobilkommunikationsendgerätestation (2) nach Anspruch 1 oder 2,  wobei jeder der Sendeparameter jedem Bewegungszustand von unbeweglich, geringer Geschwindigkeit, die eine Bewegungsgeschwindigkeit größer als 0 km/h und gleich oder kleiner als 5 km/h ist, mittlerer Geschwindigkeit, die eine Bewegungsgeschwindigkeit größer als 5 km/h ist und kleiner oder gleich als 60 km/h ist, hoher Geschwindigkeit, die eine Bewegungsgeschwindigkeit höher als 60 km/h und kleiner als 100 km/h ist, und höchster Geschwindigkeit, die eine Bewegungsgeschwindigkeit höher als 100 km/h ist, zugeordnet ist.

4. Verfahren zum Einstellen von Sendeleistung zum Einstellen einer Sendeleistung einer Mobilkommunikationsendgerätestation (2), die ein Zufallszugangsverfahren bei Verwendung eines Leistungsanstiegs einsetzt, während eine Sendeleistung gesteuert wird, und die einen Präambelteil von Sendedaten vor einem Nachrichtenteil der Sendedaten sendet,
**gekennzeichnet durch**
Unterscheiden eines Bewegungszustands der Mobilkommunikationsendgerätestation (2); und

Einstellen von Sendeparametern, die für den Leistungsanstieg in Reaktion auf den unterschiedenen Bewegungszustand verwendet werden,

wobei die Parameter des Leistungsanstiegs eine anfängliche Sendeleistung, eine Schrittweite, ein Sendeintervall, eine vorgegebene Anzahl für erneutes Senden und eine vorgegebene Anzahl für wiederholtes erneutes Senden enthalten und

wobei der Präambelteil zu dem Sendeintervall so oft gesendet wird, wie es der gegebenen Anzahl für erneutes Senden entspricht, während die Sendeleistung von der anfänglichen Sendeleistung um die Schrittweite erhöht wird, und dann der Präambelteil erneut so oft gesendet wird, wie es der gegebenen Anzahl für wiederholtes erneutes Senden entspricht, um die Sendeleistung des Nachrichtenteils einzustellen.

5. Verfahren nach Anspruch 4, wobei der Bewegungszustand der Mobilkommunikationsendgerätestation (2) eine Bewegungsgeschwindigkeit der Mobilkommunikationsendgerätestation (2) ist.

6. Verfahren nach Anspruch 4 oder 5, wobei jeder der Sendeparameter jedem Bewegungszustand von unbeweglich, geringer Geschwindigkeit, die eine Bewegungsgeschwindigkeit größer als 0 km/h und gleich oder kleiner als 5 km/h ist, mittlerer Geschwindigkeit, die eine Bewegungsgeschwindigkeit größer als 5 km/h ist und kleiner oder gleich als 60 km/h ist, hoher Geschwindigkeit, die eine Bewegungsgeschwindigkeit höher als 60 km/h und kleiner als 100 km/h ist, und höchster Geschwindigkeit, die eine Bewegungsgeschwindigkeit höher als 100 km/h ist, zugeordnet ist.

## Revendications

1. Une station de terminal de communication mobile (2), adaptée pour employer un procédé d'accès aléatoire avec l'utilisation d'une variation continue de puissance pendant qu'une puissance de transmission est contrôlée, et pour transmettre une partie de préambule de données de transmission avant une partie de message de données de transmission, la station de terminal de communication mobile (2) comprenant:

un sélecteur de paramètres de transmission de variation continue de puissance (104), adapté pour établir des paramètres de transmission utilisés pour la variation continue de puissance, pour laquelle les paramètres de variation continue de puissance comprennent une puissance de transmission initiale, une largeur de pas, un intervalle de transmission, et un nombre donné de temps de retransmission,

**caractérisée en ce que**

la station de terminal de communication mobile (2) comprend un discriminateur d'état de déplacement (102), qui discrimine un état de déplacement de la station de terminal de communication mobile (2); et le sélecteur de paramètres de transmission de variation continue de puissance (104), étant en outre adapté pour établir les paramètres de transmission en réponse à l'état de déplacement discriminé par le discriminateur d'état de déplacement (102), pour laquelle les paramètres de la variation continue de puissance comprennent en outre un nombre donné de temps de retransmission, et

pour laquelle la partie de préambule est transmise à l'intervalle de transmission en nombre donné de temps de retransmission, pendant que la puissance de transmission est augmentée depuis la puissance de transmission initiale par la largeur de pas, et ensuite la partie de préambule est retransmise en nombre donné de temps répétés de retransmission de manière à établir la puissance de transmission de la partie de message.

2. La station de terminal de communication mobile (2) selon la revendication 1, pour laquelle l'état de déplacement de la station de terminal de communication mobile (2) est une vitesse de déplacement de la station de terminal de communication mobile (2).

3. La station de terminal de communication mobile (2) selon la revendication 1 ou 2, pour laquelle chacun des paramètres de transmission est associé avec chaque état de déplacement d'aucun déplacement, d'une basse vitesse, qui est une vitesse de déplacement plus grande que 0 km/h et égale à ou plus basse que 5 km/h, d'une vitesse moyenne, qui est une vitesse de déplacement plus grande que 5 km/h et égale à ou plus basse que 60 km/h, d'une haute vitesse, qui est une vitesse de déplacement plus grande que 60 km/h et égale à ou plus basse que 100 km/h et d'une super haute vitesse, qui est une vitesse de déplacement plus grande que 100 km/h.

4. Un procédé d'établissement de puissance de transmission pour établir une puissance de transmission d'une station de terminal de communication mobile (2), qui emploie un procédé d'accès aléatoire avec l'utilisation d'une variation continue de puissance pendant qu'une puissance de transmission est contrôlée, et qui transmet une partie de préambule de données de transmission avant une partie de message de données de transmission,

**caractérisé par**

discriminer un état de déplacement de la station de terminal de communication mobile (2); et établir des paramètres de transmission utilisés pour la variation continue de puissance en réponse à l'état de déplacement discriminé,

pour lequel les paramètres de variation continue de puissance comprennent une puissance de transmission initiale, une largeur de pas, un intervalle de transmission, un nombre donné de temps de retransmission, et un nombre donné de temps répétés de retransmission, et

pour lequel la partie de préambule est transmise à l'intervalle de transmission en nombre donné de temps de retransmission, pendant que la puissance de transmission est augmentée depuis la puissance de transmission initiale par la largeur de pas, et ensuite la partie de préambule est retransmise en nombre donné de temps répétés de retransmission de manière à établir la puissance de transmission de la partie de message.

5. Le procédé selon la revendication 4, pour lequel l'état de déplacement de la station de terminal de communication mobile (2) est une vitesse de déplacement de la station de terminal de communication mobile (2).

6. Le procédé selon la revendication 4 ou 5, pour lequel chacun des paramètres de transmission est associé avec chaque état de déplacement d'aucun déplacement, d'une basse vitesse, qui est une vitesse de déplacement plus grande que 0 km/h et égale à ou plus basse que 5 km/h, d'une vitesse moyenne, qui est une vitesse de déplacement plus grande que 5 km/h et égale à ou plus basse que 60 km/h, d'une haute vitesse, qui est une vitesse de déplacement plus grande que 60 km/h et égale à ou plus basse que 100 km/h et d'une super haute vitesse, qui est une vitesse de déplacement plus grande que 100 km/h.

## F I G. 1

## F I G. 2

# F I G. 3

| SPEED STATE | SPEED STATE DISCRIMINATING THRESHOLD (km/h) | TRANSMISSION PARAMETER | | | |
|---|---|---|---|---|---|
| | | INITIAL TRANSMISSION POWER VALUE | STEP POWER WIDTH | RETRANSMISSION INTERVAL | THE NUMBER OF RETRANSMISSION TIMES |
| NOT MOVING | $v \leqq 0$ | −10dBm | 0. 5dB | 30s | 20 |
| LOW SPEED | $0 < v \leqq 5$ | −5dBm | 1. 0dB | 10s | 15 |
| MIDDLE SPEED | $5 < v \leqq 60$ | 0dBm | 3. 0dB | 5s | 10 |
| HIGH SPEED | $60 < v \leqq 100$ | 5dBm | 5. 0dB | 1s | 5 |
| SUPER HIGH SPEED | $100 < v$ | 15dBm | 7. 0dB | 100ms | 3 |

EP 2 131 621 B1

# F I G. 4

```
              ┌─────────────┐
              │    START    │
              └──────┬──────┘
                     │
      ┌──────────────▼──────────────┐
      │ SPEED STATE DISCRIMINATION  │────── S401
      └──────────────┬──────────────┘
                     │           S402
                   ◇─▼─◇          No
                 ◇         ◇─────────────────┐
                ◇ Vt-1 ≠ Vt ◇                │
                 ◇         ◇                 │
                   ◇─┬─◇                      │
                     │ Yes                    │
   ┌─────────────────▼─────────────────┐     │
   │ TRANSMISSION PARAMETER ANALYSIS   │── S403
   └─────────────────┬─────────────────┘     │
                     │◄──────────────────────┘
                     │
   ┌─────────────────▼─────────────────┐
   │   POWER RAMPING TRANSMISSION      │── S404
   └─────────────────┬─────────────────┘
                     │
              ┌──────▼──────┐
              │   RETURN    │
              └─────────────┘
```

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007266733 A
- EP 1198076 A
- WO 2005055462 A